# FASCICULE DE BREVET EUROPEEN

(11) **EP 2 236 895 B1**
(45) Date de publication et mention de la délivrance du brevet: **23.05.2012**
(21) Numéro de dépôt: 10159055.2
(22) Date de dépôt: 02.04.2010
(51) Int. Cl.: F16L 37/098

(54) **Dispositif et procédé de raccordement par encliquetage pour circuit de transfert de fluide, et ce circuit l'incorporant**
Vorrichtung und Verfahren zum Verbinden durch Einrasten für flüssigkeitsführende Leitungssysteme und ein diese Vorrichtung aufweisendes Leitungssystem
Connecting device and connecting method by means of snap action for fluid conducting circuits, and circuit incorporating such device

(30) Priorité: 02.04.2009 FR 0901608
(43) Date de publication de la demande: 06.10.2010
(73) Titulaire: HUTCHINSON, 75008 Paris (FR)
(72) Inventeur: Bernard, Christophe, 45700 Villemandeur (FR); Theau, Christophe, 45220 Chuelles (FR)
(74) Mandataire: Bolinches, Michel Jean-Marie

(56) Documents cités:
- DE-A1-102005 011 777
- DE-A1-102007 040 500
- FR-A1- 2 881 811
- GB-A- 583 364
- US-A- 4 915 421
- US-A- 5 439 258
- US-A1- 2008 012 314

## Description

La présente invention concerne un dispositif et un procédé de raccordement par encliquetage pour un circuit de transfert de fluide, et un tel circuit incorporant ce dispositif. L'invention s'applique en particulier à des circuits de climatisation ou de direction assistée pour véhicule automobile.

D'une manière générale, il est connu d'utiliser pour de tels circuits des dispositifs de raccordement à embout tubulaire mâle venant s'emmancher d'une manière étanche dans un embout tubulaire femelle par encliquetage (i.e. par connexion mécanique instantanée), comme par exemple présenté dans les documents FR-A1-2 881 811 et US-A1-2008/0012314.

Les dispositifs de raccordement qui sont décrits dans ces documents utilisent des doigts axiaux déformables d'accrochage dont est pourvu l'embout mâle ou femelle sur sa face radialement externe et qui viennent s'accrocher réversiblement sur une butée radiale de l'autre embout dans une position de raccordement « crochetée » sur la butée. Le verrouillage et le déverrouillage de cette position sont obtenus par la rotation réversible d'une bague enserrant radialement ces doigts en coopérant avec eux à la manière d'une came pour réaliser leur « crochetage » et « décrochetage » vis-à-vis de cette butée.

Un inconvénient majeur de ces dispositifs de raccordement connus par encliquetage réside dans la complexité structurelle de ces bagues tournantes de type cames et dans l'effort relativement important qui est requis pour réaliser le verrouillage et la déconnexion du raccordement, ce qui implique un coût de fabrication relativement élevé pour ces dispositifs et des opérations de raccordement/ déconnexion potentiellement malaisées pour l'opérateur.

Un but de la présente invention est de proposer un dispositif de raccordement par encliquetage pour un circuit de transfert de fluide, ce dispositif remédiant à cet inconvénient et comprenant :
- un conduit tubulaire mâle,
- un conduit tubulaire femelle destiné à recevoir le conduit mâle dans une position de raccordement du dispositif, qui est définie par au moins une butée radiale de raccordement des conduits sur laquelle est destiné à s'accrocher un crochet d'extrémité d'au moins un doigt axial radialement déformable que comporte le dispositif, au moins un joint annulaire d'étanchéité étant monté radialement entre les conduits mâle et femelle, et
- des moyens de verrouillage et de déconnexion qui sont aptes à verrouiller réversiblement le ou chaque doigt dans cette position de raccordement en étant montés contre la butée et à l'amener dans une position de déconnexion du raccordement où son crochet est désengagé de cette butée, ces moyens comprenant pour le ou chaque doigt :
   * une portion de verrouillage qui surmonte radialement ce doigt et qui est destinée à s'opposer au désengagement de son crochet de la butée, dans une position de raccordement verrouillée, et
   * une portion de déconnexion qui est surmontée radialement par ce doigt et qui est apte à le pousser radialement vers l'extérieur pour l'amener dans la position de déconnexion.

A cet effet, un dispositif selon l'invention est tel que ces moyens sont mobiles en translation axiale autour des conduits, de sorte que leur translation vers la butée les amène dans la position de raccordement verrouillée et que leur translation en sens inverse les amène dans une position de raccordement déverrouillée puis dans la position de déconnexion, laquelle est obtenue par un effet de levier appliqué par la portion de déconnexion sous une rampe que présente le ou chaque doigt pour désengager celui-ci de la butée.

Selon une autre caractéristique de l'invention, ce dispositif peut comporter un organe de maintien apte à maintenir réversiblement lesdits moyens de verrouillage et de déconnexion axialement contre la butée dans la position de raccordement verrouillée.

Contrairement aux dispositifs précités de l'art antérieur, on notera que ces moyens de verrouillage et de déconnexion permettent successivement, en combinaison avec le(s) doigt(s) d'accrochage et par de simples mouvements manuels de translation axiale appliqués à ces moyens ;
- d'obtenir le raccordement par leur translation vers la butée,
- de verrouiller ce raccordement en garantissant l'accrochage du ou de chaque doigt sur la butée,
- de déverrouiller ce raccordement en agissant sur l'organe de maintien, puis
- de le déconnecter en désengageant le(s) doigt(s) de la butée, par la translation de ces moyens en sens inverse.

Selon une autre caractéristique de l'invention, lesdits moyens de verrouillage et de déconnexion sont uniquement mobiles en translation axiale autour du conduit femelle, lequel peut être pourvu du ou de chaque doigt d'accrochage sur sa surface radialement externe et présente une extrémité femelle de raccordement venant buter contre ladite butée qui peut être formée sur le conduit mâle.

Selon un exemple particulièrement avantageux de réalisation de l'invention, ce dispositif de raccordement comporte en outre un anneau d'indexage angulaire du ou de chaque doigt qui est monté sur la butée et qui comporte au moins un logement conçu pour recevoir sélectivement ledit ou chaque crochet, de sorte à s'opposer à la rotation relative du conduit femelle autour du conduit mâle. Et, dans le cas préférentiel où ce dispositif comporte plusieurs doigts se terminant respectivement par ces crochets, au moins deux de ces derniers présentent des géométries différentes à l'instar d'au moins deux des logements, de telle sorte qu'au moins un crochet soit apte à s'accrocher à un seul de ces logements, lesquels sont de préférence formés par des épaulements de largeurs différentes dans la direction circonférentielle et correspondant à celles des crochets.

Avantageusement, lesdits moyens de verrouillage et de déconnexion peuvent être constitués d'une bague montée autour du conduit femelle et présentant une pluralité d'ouvertures régulièrement espacées sur sa circonférence, lesquelles sont chacune délimitées radialement à l'extérieur par l'une desdites portions de verrouillage et radialement à l'intérieur par l'une desdites portions de déconnexion montées sur le conduit femelle, ces ouvertures étant respectivement traversées axialement par les doigts d'accrochage.

Selon une autre caractéristique de l'invention, ladite ou chaque portion de déconnexion peut présenter en section axiale une forme de coin présentant une surface sensiblement tronconique, qui coopère en poussée avec ladite rampe du doigt d'accrochage correspondant qui est évasée radialement vers l'extérieur en direction du crochet.

Avantageusement, le ou chaque doigt d'accrochage peut présenter une encoche en amont de ladite rampe correspondante, cette encoche contribuant audit effet de levier appliqué à cette rampe.

Selon un mode préférentiel de réalisation de l'invention, ledit organe de maintien peut comprendre au moins une patte radiale élastiquement déformable qui est solidaire desdits moyens de verrouillage et de déconnexion et qui est destinée à venir s'accrocher à ladite butée de sorte à maintenir réversiblement ces moyens dans ladite position de raccordement verrouillée.

La ou chaque patte peut être avantageusement solidaire de ladite bague entre deux desdites ouvertures adjacentes et en étant axialement déportée par rapport au plan médian de la bague, la ou chaque patte présentant une extrémité radialement intérieure qui est recourbée de sorte à venir s'accrocher à ladite butée entre deux des doigts d'accrochage traversant ces ouvertures.

Dans ce mode préférentiel de l'invention, on notera que les opérations de verrouillage, de déverrouillage et de déconnexion peuvent alors être réalisées par les seules deux pièces que sont la bague et le(s) doigt(s) d'accrochage, ce qui représente un avantage en comparaison des dispositifs plus complexes de l'art antérieur.

Selon un autre mode de réalisation de l'invention, ledit organe de maintien peut être apte à rappeler élastiquement les moyens de verrouillage et de déconnexion dans la position de raccordement verrouillée. Cet organe de maintien comprend par exemple dans ce cas un ressort hélicoïdal de compression qui est monté en appui contre ladite bague et soit contre une base d'extrémité du ou de chaque doigt d'accrochage axialement opposée audit crochet d'extrémité, soit contre un épaulement radial du conduit femelle.

Selon une autre caractéristique de l'invention, le ou les joints d'étanchéité peuvent être montés au choix sur le conduit mâle ou sur le conduit femelle et sont par exemple disposés sur une portée de raccordement du conduit mâle où le conduit femelle recouvre ce conduit mâle, axialement entre une extrémité mâle de ce dernier et ladite butée.

On notera que cette portée interfaciale entre les deux conduits est avantageusement prévue relativement longue, de sorte à permettre l'utilisation d'un nombre réduit de doigts d'accrochage, voire d'un unique doigt.

Avantageusement, le ou chaque doigt d'accrochage peut être rapporté sur le conduit femelle par l'intermédiaire d'une base d'extrémité de ce doigt qui est calée derrière un épaulement radial de ce conduit et qui est reliée à ladite rampe correspondante par un tronçon axial, la longueur totale du ou de chaque doigt étant supérieure à celle de ladite portée de raccordement de sorte à minimiser l'effort nécessaire à l'accrochage et au désengagement dudit crochet correspondant.

En variante, le ou chaque doigt d'accrochage pourrait être formé d'un seul tenant avec le conduit femelle.

Ainsi, la longueur relativement importante du ou de chaque doigt d'accrochage selon l'invention permet de minimiser l'effort de translation requis pour les opérations de raccordement et de déconnexion, cet effort manuel étant relativement faible pour l'opérateur en comparaison des efforts requis dans les dispositifs de l'art antérieur à bague tournante, notamment.

Comme indiqué précédemment, un dispositif de raccordement selon l'invention peut être seulement constitué (en référence au mode préférentiel précité) des conduits mâle et femelle, du ou des joints d'étanchéité, des doigts d'accrochage par exemple au nombre de quatre et de ladite bague traversée par ces derniers, ces doigts et cette bague pouvant être réalisés en matière plastique ou métallique.

Un circuit de climatisation ou de direction assistée pour véhicule automobile selon l'invention comporte au moins un dispositif de raccordement tel que défini ci-dessus.

Un procédé de verrouillage/ déconnexion selon l'invention d'un raccordement entre deux conduits mâle et femelle est mis en oeuvre par ce dispositif tel que défini ci-dessus, et ce procédé comprend :
- pour l'obtention de la position de raccordement verrouillée :
   a) un accrochage dudit ou de chaque doigt sur ladite butée de raccordement entre ces conduits, optionnellement par l'intermédiaire d'un anneau d'indexage angulaire du ou des doigts qui surmonte la butée et qui présente un ou des logements recevant sélectivement le ou les crochets pour s'opposer à la rotation relative des conduits mâle et femelle, puis
   b) une translation axiale vers la butée desdits moyens de verrouillage et de déconnexion qui les amène contre cette butée, de manière à s'opposer au désengagement du ou de chaque doigt par ladite ou chaque portion de verrouillage de ces moyens ; et
- pour l'obtention de la position de déconnexion :
   c) un déverrouillage de cette position de raccordement pour désolidariser ces moyens de la butée, puis
   d) une translation axiale de ces moyens en sens inverse, de manière à pousser le ou chaque doigt radialement vers l'extérieur par un effet de levier appliqué par la ou chaque portion de déconnexion de ces moyens sous la rampe du ou de chaque doigt, pour désengager celui-ci de la butée.

Avantageusement, l'étape b) comprend en outre le maintien de ladite portion de verrouillage axialement contre la butée via un effort exercé sur un organe de maintien que comprend ce dispositif, et l'étape c) est mise en oeuvre par un effort exercé en sens inverse sur cet organe de maintien.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue partielle en perspective d'un conduit femelle équipé de doigts d'accrochage et d'une bague de verrouillage/ déconnexion selon l'invention,
la figure 2 est une vue partielle en perspective d'un conduit mâle équipé de joints d'étanchéité et destiné à venir s'emmancher dans le conduit femelle de la figure 1 pour former un dispositif selon l'invention,
la figure 3 est une vue partiellement en coupe axiale et en perspective du dispositif selon l'invention obtenu par emmanchement des conduits des figures 1 et 2 dans une position de raccordement non verrouillée ou déverrouillée,
la figure 4 est une vue partielle en coupe axiale du dispositif de la figure 3 selon le plan IV-IV de la figure 1, dans cette position de raccordement non verrouillée ou déverrouillée,
la figure 5 est une vue partielle en coupe axiale d'un dispositif selon l'invention correspondant à une variante de réalisation de la figure 4 selon le plan V-V de la figure 1, également dans cette position de raccordement non verrouillée ou déverrouillée,
la figure 6 est une vue partiellement en coupe axiale et en perspective du dispositif de la figure 3 dans une position de raccordement verrouillée,
la figure 7 est une vue partielle en perspective du dispositif de la figure 6 dans cette même position de raccordement verrouillée,
la figure 8 est une vue partielle en perspective d'un conduit femelle d'un troisième dispositif selon l'invention à anneau d'indexage angulaire et anti-rotation rapporté sur la butée de raccordement, correspondant à une variante de réalisation de celui de la figure 5,
la figure 9 est une vue partielle en perspective d'un conduit mâle selon l'invention qui est destiné à coopérer avec le conduit femelle de la figure 8 pour former ce troisième dispositif selon l'invention,
la figure 10 est une vue partielle en perspective de ce troisième dispositif selon l'invention en position de raccordement verrouillée, dont les conduits femelle et mâle sont tels qu'illustrés aux figures 8 et 9,
la figure 11 est une vue partielle en coupe axiale du dispositif de la figure 10 dans cette position de raccordement verrouillée, selon le plan XI-XI de cette figure 10, et
la figure 12 est une vue de face de l'arrière du dispositif de la figure 10, montrant notamment dans cette position de raccordement verrouillée le montage anti-rotation procuré par l'anneau d'indexage angulaire.

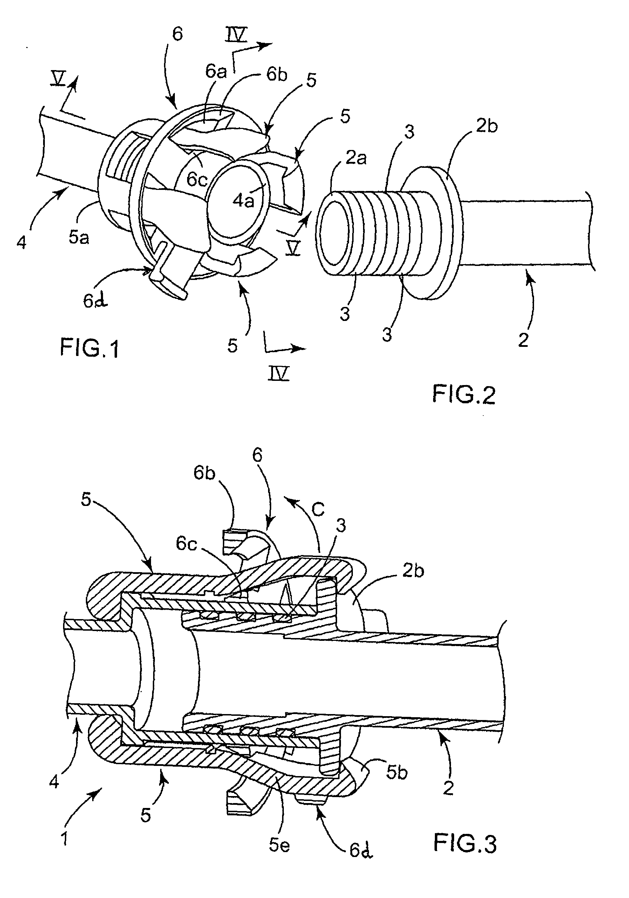

Le dispositif de raccordement 1 selon le mode de réalisation de l'invention qui est illustré aux figures 1 à 4 et 6, 7 comporte :
- un conduit tubulaire mâle 2 qui présente une extrémité mâle de raccordement 2a et sur lequel sont disposés plusieurs joints d'étanchéité toriques 3 entre l'extrémité 2a et une butée radiale de raccordement formée par une collerette circonférentielle 2b faisant saillie autour du conduit 2,
- un conduit tubulaire femelle 4 destiné à recevoir par emmanchement le conduit mâle 2 de sorte que son extrémité femelle de raccordement 4a vienne buter axialement sur la collerette 2b,
- une pluralité de longs doigts axiaux d'accrochage 5 radialement déformables (au nombre de quatre dans cet exemple de réalisation, étant précisé qu'il pourrait y en avoir un nombre différent, voire un seul) qui sont rapportés autour du conduit femelle 4 en prenant appui sur ce dernier par l'intermédiaire d'une base d'extrémité annulaire commune 5a à partir de laquelle s'étendent ces doigts 5, lesquels se terminent chacun par un crochet d'extrémité 5b recourbé radialement vers l'intérieur et destiné à s'accrocher à la collerette 2b, et
- une bague de verrouillage et de déconnexion 6 montée autour du conduit femelle 4 et apte à verrouiller réversiblement chaque doigt 5 dans une position de raccordement en étant montée contre la collerette 2b, et à l'amener dans une position de déconnexion du raccordement où chaque crochet 5b est désengagé de la collerette 2b, cette bague 6 présentant une pluralité d'ouvertures 6a régulièrement espacées sur sa circonférence et respectivement traversées axialement par les doigts 5.

Plus précisément, chaque ouverture 6a de la bague 6 est délimitée, d'une part, radialement à l'extérieur par une portion de verrouillage 6b du doigt 5 sous-jacent qui présente en section axiale une forme de coin à pointe vers le bas et qui est destinée à s'opposer par cette pointe au désengagement de son crochet 5b hors de la collerette 2b dans la position de raccordement verrouillée et, d'autre part, radialement à l'intérieur par une portion de déconnexion 6c située sous ce doigt 5 qui présente en section axiale une forme de coin à surface sensiblement tronconique (dans l'exemple des figures, en arc de tronc de cône divergeant radialement vers l'extérieur en direction de la butée 2b) apte à pousser ce doigt 5 radialement vers l'extérieur pour l'amener dans la position de déconnexion, ce qui a pour effet de désengager son crochet 5b de la collerette 2b.

De plus, une patte radiale 6d élastiquement déformable est formée d'un seul tenant avec la bague 6 entre deux ouvertures 6a adjacentes de celle-ci et de manière axialement déportée par rapport au plan médian de la bague 6, cette patte 6d étant destinée à venir s'accrocher à la collerette 2b entre deux doigts 5 adjacents de sorte à maintenir la bague 6 dans la position de raccordement verrouillée. A cet effet, la patte 6d présente une extrémité radialement intérieure 6e qui est recourbée pour venir « crocheter » la collerette 2b.

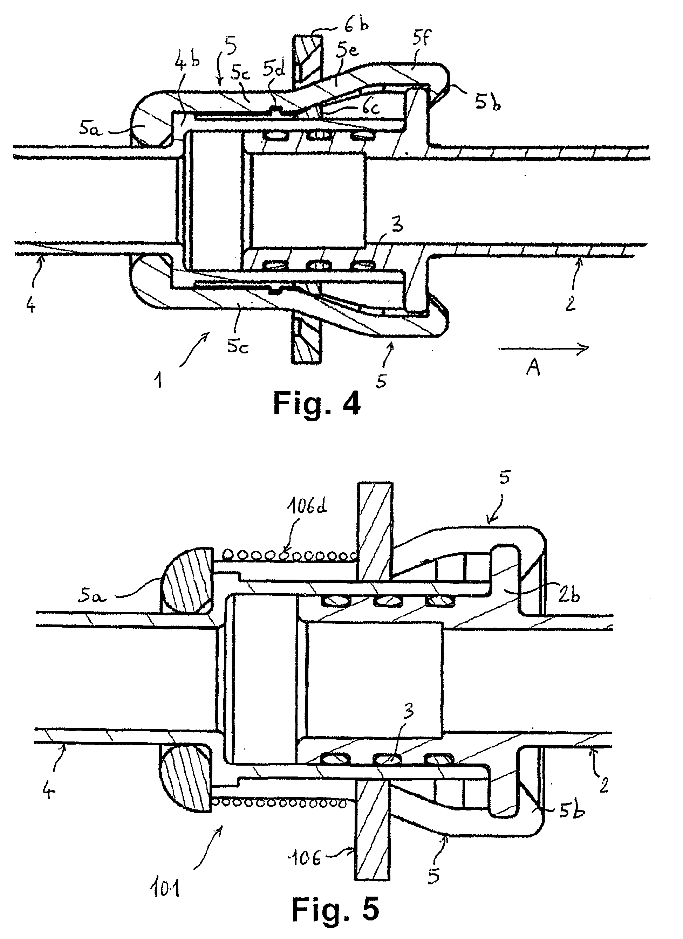

Comme illustré aux figures 3 et 4, la base annulaire 5a portant les doigts 5 est par exemple calée derrière un épaulement annulaire 4b du conduit femelle 4, et chaque doigt 5 présente essentiellement :
- un premier tronçon axial 5c sensiblement parallèle à l'axe de symétrie du conduit femelle 4 et se terminant par une encoche 5d sur sa face inférieure,
- une rampe oblique 5e qui est évasée radialement vers l'extérieur en direction du crochet 5b et avec laquelle est destinée à coopérer la portion de déconnexion 6c sous-jacente de la bague 6 (l'encoche 5d étant conçue pour augmenter l'élasticité du doigt 5 lors de l'écartement ou ouverture radiale de la rampe 5e par la poussée de cette portion 6c), et
- un second tronçon axial 5f qui est plus court que le premier tronçon 5c et qui se termine par le crochet 5b.

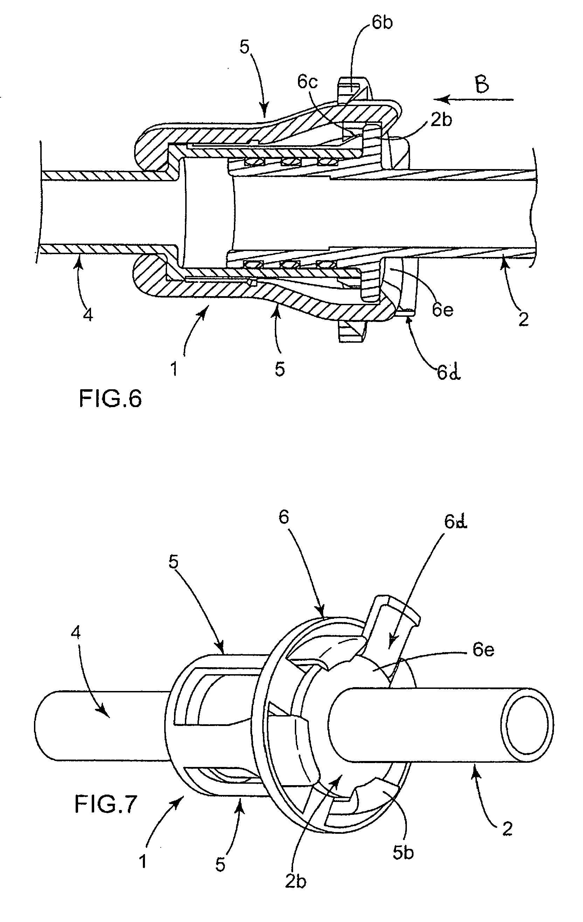

On passe de la position de raccordement non verrouillée des figures 3 et 4 à celle verrouillée des figures 6 et 7 de la manière suivante.

Après avoir positionné les doigts 5 pour qu'ils viennent s'accrocher à la collerette 2b dans la position de raccordement non verrouillée des figures 3 et 4, on fait coulisser axialement la bague 6 radialement autour de ces doigts 5 dans le sens de la flèche A (figure 4), de sorte à l'amener contre la collerette 2b et l'on fait basculer alors la patte de maintien 6d pour qu'elle s'accroche également à la collerette 2b. On obtient ainsi la position de raccordement verrouillée des figures 6 et 7, où les crochets 5b des doigts 5 sont verrouillés sur la collerette 2b par l'immobilisation axiale de la bague 6 venant les enserrer sur cette collerette 2b via les portions de verrouillage 6b.

Inversement, on passe de cette position de raccordement verrouillée à celle de raccordement déverrouillée des figures 3 et 4 en commençant par faire basculer la patte de maintien 6d de la bague 6 de manière à la désengager de la collerette 2b, puis en faisant coulisser axialement la bague 6 ainsi libérée dans le sens de la flèche B (figure 6).

Quant à la position de déconnexion du raccordement, elle est obtenue au cours de ce coulissement par le soulèvement radial des rampes 5e des doigts 5 (voir flèche C à la figure 3) sous l'effet de la poussée des portions de déconnexion 6c sous-jacentes avec comme conséquence l'ouverture ou écartement radial, par un effet de levier, des seconds tronçons 5f des doigts 5 et donc le désengagement (non visible sur ces figures) des crochets 5b hors de la collerette 2b.

Le dispositif de raccordement 101 selon la variante de la figure 5 se différencie uniquement de celui des figures 3 et 4, en ce que la patte de maintien 6d de la bague 6 est remplacée par un ressort hélicoïdal de compression 106d qui est monté en appui contre la base annulaire 5a portant les doigts 5 et contre la bague 106 (dont le reste est inchangé, les ouvertures de la bague 106 n'étant pas dans le plan de coupe V-V), de sorte à rappeler cette bague 106 dans la position de raccordement verrouillée.

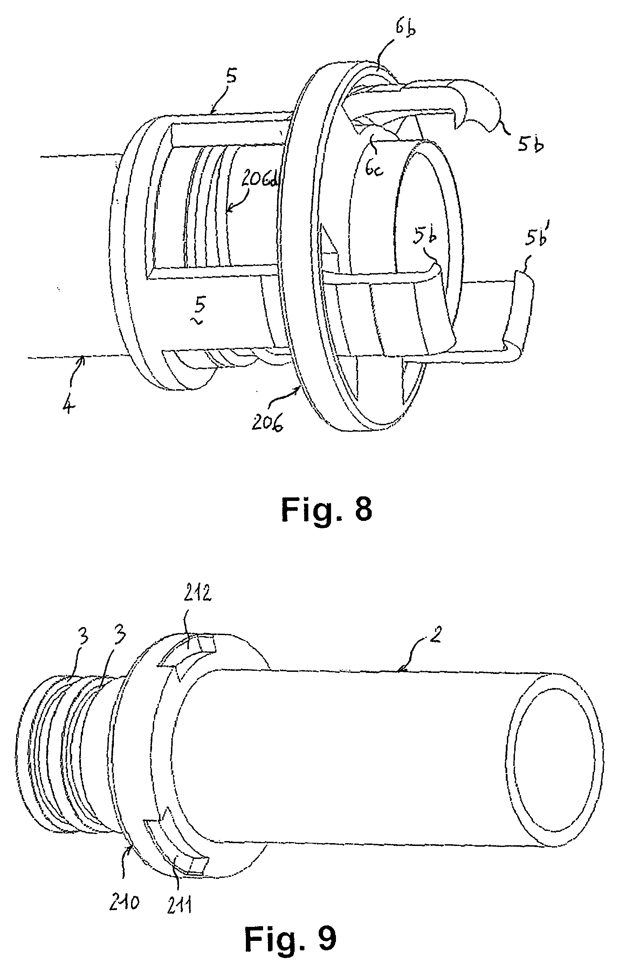

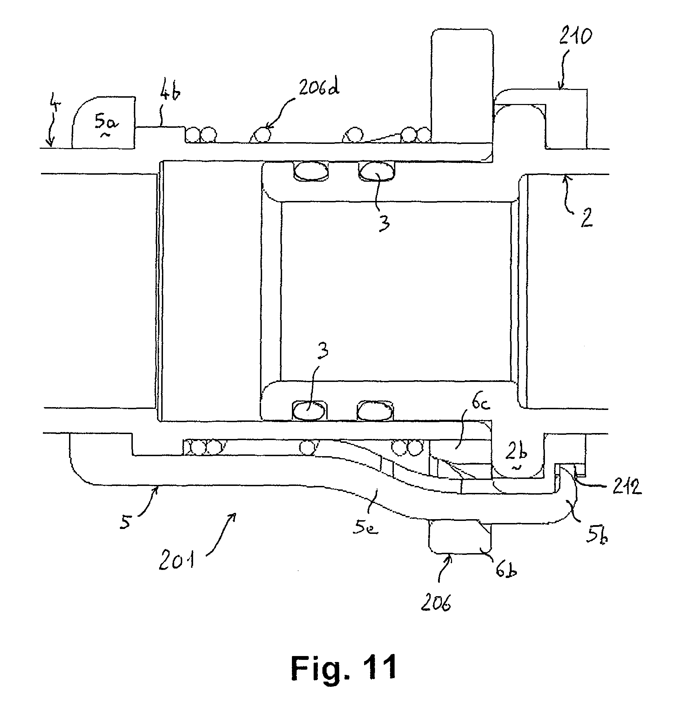

Le troisième dispositif de raccordement 201 selon l'invention qui est illustré aux figures 8 à 12 se différencie essentiellement de celui de la figure 5, en ce que :
- le ressort hélicoïdal de compression 206d, qui est monté sur le conduit femelle 4 en appui contre la bague 206 (analogue à la bague 106), prend appui à son extrémité opposée contre l'arrière de l'épaulement annulaire 4b devant lequel est calée la base annulaire 5a des doigts 5 (voir figure 11), et surtout en ce que
- sur la face arrière et sur la face radialement externe de la butée 2b est monté un anneau 210 qui présente à intervalles réguliers sur sa circonférence autant de logements ou encoches 211, 212, 213 en forme d'épaulements que de doigts 5, l'un des logements 211 étant formé par un épaulement de largeur maximale conçue pour recevoir sélectivement l'un des crochets 5b' également de largeur maximale alors que les deux autres logements 212 et 213 présentent dans cet exemple une même largeur inférieure à l'instar des autre crochets 5b (voir figures 9, 10 et 12).

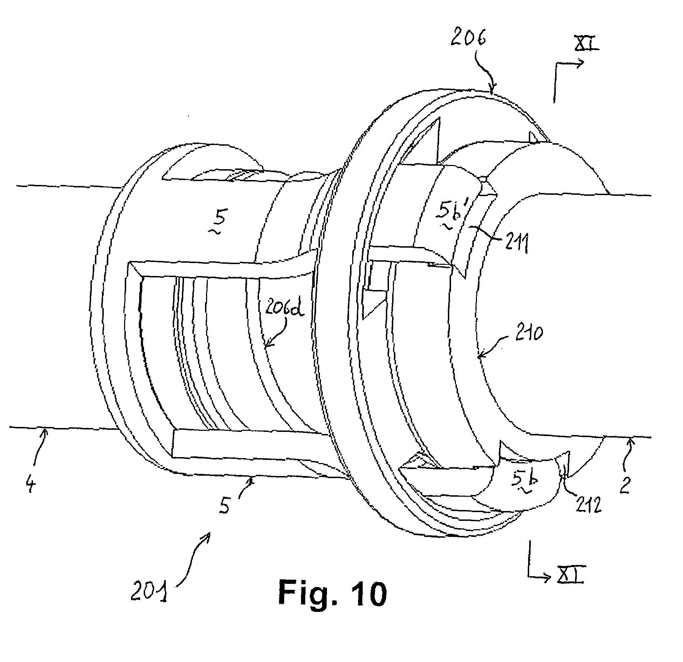

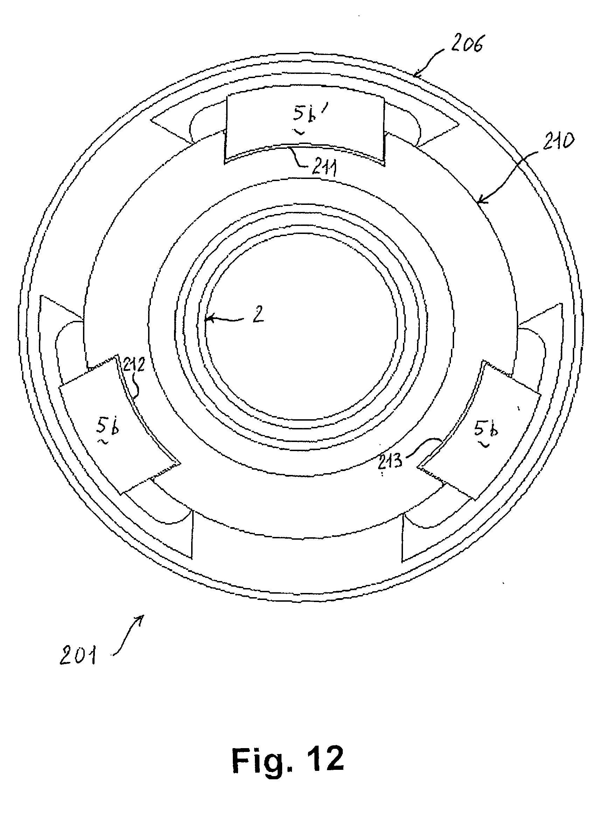

Comme cela est notamment visible aux figures 10 et 12, on comprend que cet anneau 210 rapporté autour de la butée 2b - face avant de cette butée 2b exceptée, du fait que la bague 206 vient précisément appuyer contre cette face avant - permet à la fois d'indexer angulairement les doigts 5 autour des conduits mâle 2 et femelle 4 et de s'opposer à la rotation relative de ces derniers.

On notera que d'autres manières d'accrocher sélectivement un ou plusieurs doigts dans le ou les logements correspondants d'anneau seraient envisageables pour obtenir cet indexage et ce blocage en rotation, en variante des différentes largeurs précitées des doigts 5 et des logements 211 à 213. On notera également que l'on pourrait prévoir à cet effet un nombre différents de doigts coopérant sélectivement avec un nombre différent de logements d'anneau.

Comme indiqué précédemment, on peut noter que la longueur importante des doigts 5 permet les coulissements précités avec des efforts axiaux à fournir relativement faibles.

Concernant les applications préférentielles de climatisation et de direction assistée pour les circuits incorporant de tels dispositifs 1, 101 selon l'invention, on peut par exemple utiliser, à titre nullement limitatif :
- pour les conduits mâle 2 et femelle 4 : des diamètres compris entre 8 mm et 25 mm ;
- une pression de fonctionnement allant de 20 à 25 bars, et
- une température de fonctionnement allant de 100 à 110° C.

## Revendications

1. Dispositif de raccordement (1, 101, 201) par encliquetage pour un circuit de transfert de fluide, en particulier de climatisation ou de direction assistée, le dispositif comprenant :
- un conduit tubulaire mâle (2),
- un conduit tubulaire femelle (4) destiné à recevoir le conduit mâle dans une position de raccordement du dispositif, qui est définie par au moins une butée radiale (2b) de raccordement des conduits sur laquelle est destiné à s'accrocher un crochet d'extrémité (5b, 5b') d'au moins un doigt axial (5) radialement déformable que comporte le dispositif, au moins un joint annulaire d'étanchéité (3) étant monté radialement entre les conduits mâle et femelle, et
- des moyens de verrouillage et de déconnexion (6, 106, 206) qui sont aptes à verrouiller réversiblement le ou chaque doigt dans cette position de raccordement en étant montés contre la butée et à l'amener dans une position de déconnexion du raccordement où son crochet est désengagé de cette butée, ces moyens comprenant pour le ou chaque doigt :
* une portion de verrouillage (6b) qui surmonte radialement ce doigt et qui est destinée à s'opposer au désengagement de son crochet hors de la butée, dans une position de raccordement verrouillée, et
* une portion de déconnexion (6c) qui est surmontée radialement par ce doigt et qui est apte à le pousser radialement vers l'extérieur pour l'amener dans la position de déconnexion,
**caractérisé en ce que** lesdits moyens sont mobiles en translation axiale autour des conduits, de telle sorte que leur translation vers la butée les amène dans la position de raccordement verrouillée et que leur translation en sens inverse les amène dans une position de raccordement déverrouillée puis dans la position de déconnexion, laquelle est obtenue par un effet de levier appliqué par la portion de déconnexion sous une rampe (5e) que présente le ou chaque doigt pour désengager ce dernier de la butée.

2. Dispositif de raccordement (1, 101, 201) selon la revendication 1, **caractérisé en ce que** lesdits moyens de verrouillage et de déconnexion (6, 106, 206) sont uniquement mobiles en translation axiale autour du conduit femelle (4), lequel est pourvu du ou de chaque doigt d'accrochage (5) sur sa surface radialement externe et présente une extrémité femelle de raccordement (4a) venant buter contre ladite butée (2b) qui est formée sur le conduit mâle (2).

3. Dispositif de raccordement (201) selon la revendication 2, **caractérisé en ce qu'**il comporte en outre un anneau (210) d'indexage angulaire dudit ou de chaque doigt (5) qui est monté sur ladite butée (2b) et qui comporte au moins un logement (211) conçu pour recevoir sélectivement ledit ou chaque crochet (5b'), de sorte à s'opposer à la rotation relative du conduit femelle (4) autour du conduit mâle (2).

4. Dispositif de raccordement (201) selon la revendication 3 du type comportant plusieurs doigts (5) se terminant respectivement par lesdits crochets (5b, 5b'), **caractérisé en ce qu'**au moins deux des crochets présentent des géométries différentes à l'instar d'au moins deux desdits logements (211 et 212, 213), de telle sorte qu'au moins un crochet (5b') soit apte à s'accrocher à un seul de ces logements (211), lesquels sont de préférence formés par des épaulements de largeurs différentes dans la direction circonférentielle et correspondant à celles des crochets.

5. Dispositif de raccordement (1, 101, 201) selon une des revendications 2 à 4, **caractérisé en ce que** lesdits moyens de verrouillage et de déconnexion (6, 106, 206) sont constitués d'une bague montée autour du conduit femelle (4) et présentant une pluralité d'ouvertures (6a) régulièrement espacées sur sa circonférence, lesquelles sont chacune délimitées radialement à l'extérieur par l'une desdites portions de verrouillage (6b) et radialement à l'intérieur par l'une desdites portions de déconnexion (6c) montées sur le conduit femelle, ces ouvertures étant respectivement traversées axialement par les doigts d'accrochage (5).

6. Dispositif de raccordement (1, 101, 201) selon une des revendications précédentes, **caractérisé en ce que** ladite ou chaque portion de déconnexion (6c) présente en section axiale une forme de coin présentant une surface sensiblement tronconique, qui coopère en poussée avec ladite rampe (5e) du doigt d'accrochage (5) correspondant qui est évasée radialement vers l'extérieur en direction du crochet (5b, 5b'), et de préférence en ce que le ou chaque doigt d'accrochage (5) présente une encoche (5d) en amont de ladite rampe (5e) correspondante, cette encoche contribuant audit effet de levier appliqué à cette rampe.

7. Dispositif de raccordement (1, 101, 201) selon une des revendications précédentes, **caractérisé en ce qu'**il comporte un organe de maintien (6d, 106d, 206d) apte à maintenir réversiblement lesdits moyens de verrouillage et de déconnexion (6, 106, 206) axialement contre la butée (2b) dans la position de raccordement verrouillée.

8. Dispositif de raccordement (1) selon la revendication 7, **caractérisé en ce que** ledit organe de maintien (6d) comprend au moins une patte radiale élastiquement déformable qui est solidaire desdits moyens de verrouillage et de déconnexion (6) et qui est destinée à venir s'accrocher à ladite butée (2b) de sorte à maintenir réversiblement ces moyens dans ladite position de raccordement verrouillée.

9. Dispositif de raccordement (1) selon les revendications 5 et 8, **caractérisé en ce que** ladite ou chaque patte (6d) est solidaire de ladite bague (6) entre deux desdites ouvertures (6a) adjacentes et en étant axialement déportée par rapport au plan médian de la bague, la ou chaque patte présentant une extrémité radialement intérieure (6e) qui est recourbée de sorte à venir s'accrocher à ladite butée (2b) entre deux des doigts d'accrochage (5) traversant ces ouvertures.

10. Dispositif de raccordement (101, 201) selon la revendication 7, **caractérisé en ce que** ledit organe de maintien (106d, 206d) est apte à rappeler élastiquement lesdits moyens de verrouillage et de déconnexion (106, 206) dans ladite position de raccordement verrouillée.

11. Dispositif de raccordement (101) selon les revendications 5 et 10, **caractérisé en ce que** ledit organe de maintien (106d, 206d) comprend un ressort hélicoïdal de compression qui est monté en appui contre ladite bague (106, 206) et soit contre une base d'extrémité (5a) du ou de chaque doigt d'accrochage (5) axialement opposée audit crochet d'extrémité (5b), soit contre un épaulement radial (4b) du conduit femelle (4).

12. Dispositif de raccordement (1, 101) selon une des revendications précédentes, **caractérisé en ce que** le ou les joints d'étanchéité (3) sont disposés sur une portée de raccordement du conduit mâle (2) où le conduit femelle (4) recouvre ce conduit mâle (2), axialement entre une extrémité mâle (2a) de ce dernier et ladite butée (2b).

13. Dispositif de raccordement (1, 101, 201) selon la revendication 12, **caractérisé en ce que** le ou chaque doigt d'accrochage (5) est rapporté sur le conduit femelle (4) par l'intermédiaire d'une base d'extrémité (5a) de ce doigt qui est calée derrière un épaulement radial (4b) de ce conduit et qui est reliée à ladite rampe (5e) correspondante par un tronçon axial (5c), la longueur du ou de chaque doigt étant supérieure à celle de ladite portée de raccordement de sorte à minimiser l'effort nécessaire à l'accrochage et au désengagement dudit crochet (5b, 5b') correspondant.

14. Dispositif de raccordement (1) selon les revendications 8 et 13, **caractérisé en ce qu'**il est constitué des conduits mâle (2) et femelle (4), du ou des joints d'étanchéité (3), des doigts d'accrochage (5) par exemple au nombre de quatre et de ladite bague (6) traversée par ces derniers.

15. Circuit de climatisation ou de direction assistée pour véhicule automobile, **caractérisé en ce qu'**il comporte au moins un dispositif de raccordement (1, 101, 201) selon une des revendications précédentes.

16. Procédé de verrouillage/ déconnexion d'un raccordement entre deux conduits mâle (2) et femelle (4) mis en oeuvre par un dispositif (1, 101, 201) selon une des revendications 1 à 14, **caractérisé en ce qu'**il comprend :
- pour l'obtention de la position de raccordement verrouillée :
a) un accrochage dudit ou de chaque doigt (5) sur ladite butée de raccordement (2b) entre ces conduits, optionnellement par l'intermédiaire d'un anneau (210) d'indexage angulaire du ou des doigts qui surmonte la butée et qui présente un ou des logements (211, 212, 213) recevant sélectivement le ou les crochets (5b, 5b') pour s'opposer à la rotation relative des conduits mâle et femelle, puis
b) une translation axiale (A) vers la butée desdits moyens de verrouillage et de déconnexion (6, 106, 206) qui les amène contre cette butée, de manière à s'opposer au désengagement du ou de chaque doigt par ladite ou chaque portion de verrouillage (6b) de ces moyens, cette étape b) comprenant de préférence en outre le maintien de ladite portion de verrouillage axialement contre la butée (2b) via un effort exercé sur un organe de maintien (6d, 106d, 206d) que comprend ce dispositif ; et
- pour l'obtention de la position de déconnexion :
c) un déverrouillage de cette position de raccordement pour désolidariser ces moyens de la butée, cette étape c) étant de préférence mise en oeuvre par un effort exercé en sens inverse sur l'organe de maintien puis
d) une translation axiale de ces moyens en sens inverse (B), de manière à pousser le ou chaque doigt radialement vers l'extérieur par un effet de levier appliqué par ladite ou chaque portion de déconnexion (6c) de ces moyens sous ladite rampe (5e) du ou de chaque doigt, pour désengager ce dernier de la butée.

## Claims

1. Snap-action connecting device (1, 101, 201) for a fluid conducting circuit, particularly for air-conditioning or power-assisted steering, the device comprising:
- a male tubular conduit (2),
- a female tubular conduit (4) adapted to accommodate the male conduit in a connecting position of the device, which is defined by at least one radial connecting abutment (2b) for the conduits, to which an end hook (5b, 5b') of at least one radially deformable axial pawl (5) belonging to the device is intended to be attached, at least one annular sealing joint (3) being mounted radially between the male and female conduits, and
- locking and release means (6, 106, 206) which are adapted to reversibly lock the or each pawl in this connecting position, being mounted against the abutment, and to bring it into a disconnected position of the connection in which its hook is disengaged from this abutment, these means comprising, for the or each pawl:
• a locking portion (6b) which radially surmounts this pawl and is adapted to oppose the disengagement of its hook from the abutment, in a locked connecting position, and
• a release portion (6c) which is radially surmounted by this pawl and which is adapted to push it radially outwards to bring it into the disconnected position,
**characterised in that** the said means are movable in axial translation about the conduits, such that their translation towards the abutment brings them into the locked connecting position and their translation in the opposite direction brings them into an unlocked connecting position, then into the disconnected position, which is achieved by a lever action applied by the release portion under a ramp (5e) provided on the or each pawl to disengage the latter from the abutment.

2. Connecting device (1, 101, 201) according to claim 1, **characterised in that** the said locking and release means (6, 106, 206) are movable solely in axial translation about the female conduit (4), which is provided with the or each attachment pawl (5) on the radially outer surface thereof and comprises a female connecting end (4a) which bears against said abutment (2b) formed on the male conduit (2).

3. Connecting device (201) according to claim 2, **characterised in that** it further comprises an angular indexing ring (210) for the or each pawl (5), which is mounted on the said abutment (2b) and comprises at least one recess (211) designed to receive the or each hook (5b') selectively, so as to oppose the relative rotation of the female conduit (4) about the male conduit (2).

4. Connecting device (201) according to claim 3, of the type comprising a plurality of pawls (5) terminating respectively in said hooks (5b, 5b'), **characterised in that** at least two of the hooks have different geometries, in the same manner as at least two of said recesses (211 and 212, 213), so that at least one hook (5b') is adapted to be attached to only one of these recesses (211), which are preferably formed by shoulders of different widths in the circumferential direction and corresponding to those of the hooks.

5. Connecting device (1, 101, 201) according to one of claims 2 to 4, **characterised in that** the said locking and release means (6, 106, 206) consist of a ring mounted around the female conduit (4) and having a plurality of openings (6a) regularly spaced around its circumference, each of which is delimited radially outwardly by one of said locking portions (6b) and radially inwardly by one of said release portions (6c) mounted on the female conduit, the attachment pawls (5) respectively passing axially through these openings.

6. Connecting device (1, 101, 201) according to one of the preceding claims, **characterised in that** said or each release portion (6c) is wedge-shaped in axial section with a substantially frustum-shaped surface which cooperates in thrust with said ramp (5e) of the corresponding attachment pawl (5) which tapers radially outwards in the direction of the hook (5b, 5b'), and preferably **in that** the or each attachment pawl (5) has a notch (5d) upstream of the corresponding ramp (5e), this notch contributing to said lever action applied to this ramp.

7. Connecting device (1, 101, 201) according to one of the preceding claims, **characterised in that** it comprises a holding member (6d, 106d, 206d) capable of reversibly holding the said locking and release means (6, 106, 206) axially against the abutment (2b) in the locked connecting position.

8. Connecting device (1) according to claim 7, **characterised in that** the holding member (6d) comprises at least one elastically deformable radial lug which is integrally attached to the said locking and release means (6) and which is adapted to become attached to said abutment (2b) so as to hold these means reversibly in the said locked connecting position.

9. Connecting device (1) according to claims 5 and 8, **characterised in that** the or each said lug (6d) is integrally attached to said ring (6) between two of said adjacent openings (6a) and, being axially offset relative to the median plane of the ring, the or each lug having a radially inner end (6e) which is bent so as to be attached to said abutment (2b) between two of the attachment pawls (5) passing through these openings.

10. Connecting device (101, 201) according to claim 7, **characterised in that** the said holding member (1 06d, 206d) is adapted to restore the said locking and release means (106, 206) elastically to the said locked connecting position.

11. Connecting device (101) according to claims 5 and 10, **characterised in that** the said holding member (1 06d, 206d) comprises a helical compression spring which is mounted so as to bear against the said ring (106, 206) and either against an end base (5a) of the or each attachment pawl (5) axially opposite the said end hook (5b), or against a radial shoulder (4b) of the female conduit (4).

12. Connecting device (1, 101) according to one of the preceding claims, **characterised in that** the sealing joint or joints (3) is or are arranged over a connecting range of the male conduit (2) where the female conduit (4) covers this male conduit (2), axially between a male end (2a) of the latter and said abutment (2b).

13. Connecting device (1, 101, 201) according to claim 12, **characterised in that** the or each attachment pawl (5) is fitted to the female conduit (4) via an end base (5a) of this pawl which is keyed behind a radial shoulder (4b) of this conduit and which is connected to the said corresponding ramp (5e) by an axial section (5c), the length of the or each pawl being greater than that of the connecting range, so as to minimise the force required to attach and disengage the corresponding hook (5b, 5b').

14. Connecting device (1) according to claims 8 and 13, **characterised in that** it is made up of the male (2) and female conduits (4), the sealing joint or joints (3), the attachment pawls (5), of which there may be four, for example, and the ring (6) through which the latter pass.

15. Air-conditioning or power-assisted steering circuit for an automotive vehicle, **characterised in that** it comprises at least one connecting device (1, 101, 201) according to one of the preceding claims.

16. Method of locking/releasing a connection between two male (2) and female conduits (4) implemented by a device (1, 101, 201) according to one of claims 1 to 14, **characterised in that** it comprises:
- in order to obtain the locked connecting position:
a) attachment of the or each pawl (5) to the said connecting abutment (2b) between these conduits, optionally via an angular indexing ring (210) of the pawl or pawls which surmounts the abutment and which has one or more recesses (211, 212, 213) selectively accommodating the hook or hooks (5b, 5b') for opposing the relative rotation of the male and female conduits, then
b) axial translation (A) of the said locking and release means (6, 106, 206) towards the abutment, which moves them against this abutment, so as to oppose the disengagement of the or each pawl by the or each locking portion (6b) of these means, this step b) preferably further comprising holding the said locking portion axially against the abutment (2b) by a force exerted by a holding member (6d, 106d, 206d) belonging to this device; and
- in order to obtain the disconnected position:
c) unlocking this connecting position in order to release these means from the abutment, this step c) preferably being carried out by a force exerted in the opposite direction on the holding member, then
d) an axial translation of these means in the opposite direction (B), so as to push the or each pawl radially outwards by a lever action applied by the or each release portion (6c) of these means under the said ramp (5e) of the or each pawl, to disengage the latter from the abutment.

## Patentansprüche

1. Vorrichtung zum Verbinden (1, 101, 201) durch Verrasten für einen Fluidtransportkreislauf, insbesondere Klimatisierungs- oder Servolenkungskreislauf, wobei die Vorrichtung umfasst:
- eine rohrförmige einzusteckende Leitung (2),
- eine rohrförmige aufnehmende Leitung (4), die dazu bestimmt ist, die einzusteckende Leitung in einer Verbindungsposition der Vorrichtung aufzunehmen, welche durch wenigstens einen radialen Verbindungsanschlag (2b) der Leitungen definiert ist, an dem sich ein endseitiger Haken (5b, 5b') wenigstens eines radial verformbaren, axialen Fingers (5), den die Vorrichtung umfasst, festhaken soll, wobei wenigstens eine Ringdichtung (3) zwischen der einzusteckenden und der aufnehmenden Leitung radial angebracht ist, sowie
- Mittel zum Verriegeln und Trennen (6, 106, 206), die geeignet sind, durch ihr Anbringen an dem Anschlag den oder jeden Finger in dieser Verbindungsposition reversibel zu verriegeln, und ihn in eine Position zum Trennen der Verbindung zu bringen, in der sein Haken von diesem Anschlag außer Eingriff ist, wobei diese Mittel für den oder jeden Finger umfassen:
- einen Verriegelungsabschnitt (6b), der diesen Finger radial übegreift und der dazu bestimmt ist, dem Außereingriffbringen seines Hakens von dem Anschlag in einer verriegelten Verbindungsposition entgegen zu wirken, und
- einen Trennabschnitt (6c), der von diesem Finger radial übergriffen ist und der geeignet ist, diesen radial nach außen zu drücken, um ihn in die Trennposition zu bringen,
**dadurch gekennzeichnet, dass** die Mittel um die Leitungen herum axial verschiebebeweglich sind, derart, dass ihr Verschieben in Richtung des Anschlags sie in die verriegelte Verbindungsposition bringt und dass ihr Verschieben in umgekehrter Richtung sie in eine entriegelte Verbindungsposition, anschließend in die Trennposition bringt, welche durch eine Hebelwirkung erreicht wird, die durch den Trennabschnitt unter einer Rampe (5e), die der oder jeder Finger aufweist, angelegt wird, um letzteren von dem Anschlag außer Eingriff zu bringen.

2. Verbindungsvorrichtung (1, 101, 201) nach Anspruch 1, **dadurch gekennzeichnet, dass** die Verriegelungs- und Trennmittel (6, 106, 206) lediglich um die aufnehmende Leitung (4) herum axial verschiebebeweglich sind, welche an ihrer radial äußeren Fläche mit dem oder jedem Einhakfinger (5) versehen ist und ein aufnehmendes Verbindungsende (4a) aufweist, das an dem Anschlag (2b), welcher an der einzusteckenden Leitung (2) ausgebildet ist, in Anschlag kommt.

3. Verbindungsvorrichtung (201) nach Anspruch 2, **dadurch gekennzeichnet, dass** sie ferner einen Ring (210) zur Winkelverriegelung des oder eines jeden Fingers (5) umfasst, der an dem Anschlag (2b) angebracht ist und der wenigstens eine Aufnahme (211) umfasst, die ausgebildet ist, um den oder jeden Haken (5b') selektiv aufzunehmen, um der Relativdrehung der aufnehmenden Leitung (4) um die einzusteckende Leitung (2) entgegen zu wirken.

4. Verbindungsvorrichtung (201) nach Anspruch 3, vom Typ umfassend mehrere Finger (5), die jeweils durch die Haken (5b, 5b') auslaufen, **dadurch gekennzeichnet, dass** wenigstens zwei der Haken unterschiedliche Geometrien entsprechend wenigstens zwei der Aufnahmen (211 und 212, 213) aufweisen, derart, dass wenigstens ein Haken (5b') geeignet ist, sich an einer einzigen dieser Aufnahmen (211) festzuhaken, welche vorzugsweise von Schultern gebildet sind, deren Breiten in Umfangsrichtung unterschiedlich sind und denjenigen der Haken entsprechen.

5. Verbindungsvorrichtung (1, 101, 201) nach einem der Ansprüche 2 bis 4, **dadurch gekennzeichnet, dass** die Verriegelungs- und Trennmittel (6, 106, 206) von einem Ring gebildet sind, der um die aufnehmende Leitung (4) herum angebracht ist und eine Vielzahl von über seinen Umfang gleichmäßig beabstandeten Öffnungen (6a) aufweist, die jeweils radial außen durch einen der Verriegelungsabschnitte (6b) und radial innen durch einen der Trennabschnitte (6c) begrenzt sind, welche an der aufnehmenden Leitung angebracht sind, wobei diese Öffnungen von den Einhakfingern (5) jeweils axial durchgriffen werden.

6. Verbindungsvorrichtung (1, 101, 201) nach einem der vorhergehenden Ansprüche, **dadurch gekennzeichnet, dass** der oder jeder Trennabschnitt (6c) im axialen Querschnitt eine Keilform hat, die eine im Wesentlichen kegelstumpfförmige Fläche aufweist, welche mit der Rampe (5e) des entsprechenden Einhakfingers (5), die in Richtung des Hakens (5b, 5b') radial nach außen erweitert ist, schiebend zusammenwirkt, und dass vorzugsweise der oder jeder Einhakfinger (5) vor der entsprechenden Rampe (5e) eine Nut (5d) aufweist, wobei diese Nut zu der an diese Rampe angelegten Hebelwirkung beiträgt.

7. Verbindungsvorrichtung (1, 101, 201) nach einem der vorhergehenden Ansprüche, **dadurch gekennzeichnet, dass** sie ein Halteorgan (6d, 106d, 206d) umfasst, das geeignet ist, die Verriegelungs- und Trennmittel (6, 106, 206) in der verriegelten Verbindungsposition auf reversible Weise axial an dem Anschlag (2b) zu halten.

8. Verbindungsvorrichtung (1) nach Anspruch 7, **dadurch gekennzeichnet, dass** das Halteorgan (6d) wenigstens eine elastisch verformbare, radiale Lasche umfasst, die mit den Verriegelungs- und Trennmitteln (6) fest verbunden ist und die dazu bestimmt ist, sich an dem Anschlag (2b) festzuhaken, um diese Mittel in der verriegelten Verbindungsposition reversibel zu halten.

9. Verbindungsvorrichtung (1) nach den Ansprüchen 5 und 8, **dadurch gekennzeichnet, dass** die oder jede Lasche (6d) mit dem Ring (6) zwischen zwei der benachbarten Öffnungen (6a) fest verbunden und dabei gegenüber der Mittelebene des Rings axial versetzt ist, wobei die oder jede Lasche ein radial inneres Ende (6e) aufweist, das umgebogen ist, um sich an dem Anschlag (2b) zwischen zwei der diese Öffnungen durchgreifenden Einhakfinger (5) festzuhaken.

10. Verbindungsvorrichtung (101, 201) nach Anspruch 7, **dadurch gekennzeichnet, dass** das Halteorgan (106d, 206d) geeignet ist, die Verriegelungs- und Trennmittel (106, 206) in die verriegelte Verbindungsposition elastisch rückzustellen.

11. Verbindungsvorrichtung (101) nach den Ansprüchen 5 und 10, **dadurch gekennzeichnet, dass** das Halteorgan (106d, 206d) eine Schraubendruckfeder umfasst, die an dem Ring (106, 206) und entweder an einer endseitigen Basis (5a) des oder eines jeden Einhakfingers (5), die dem endseitigen Haken (5b) axial gegenüberliegt, oder an einer radialen Schulter (4b) der aufnehmenden Leitung (4) anliegend angebracht ist.

12. Verbindungsvorrichtung (1, 101) nach einem der vorhergehenden Ansprüche, **dadurch gekennzeichnet, dass** die Dichtung oder Dichtungen (3) an einem Verbindungsbereich der einzusteckenden Leitung (2) angeordnet sind, wo die aufnehmende Leitung (4) diese einzusteckende Leitung (2) zwischen einem einzusteckenden Ende (2a) letzterer und dem Anschlag (2b) axial bedeckt.

13. Verbindungsvorrichtung (1, 101, 201) nach Anspruch 12, **dadurch gekennzeichnet, dass** der oder jeder Einhakfinger (5) über eine endseitige Basis (5a) dieses Fingers, die hinter einer radialen Schulter (4b) dieser Leitung festgekeilt ist und die mit der entsprechenden Rampe (5e) durch einen axialen Abschnitt (5c) verbunden ist, an die aufnehmende Leitung (4) angesetzt ist, wobei die Länge des oder eines jeden Fingers größer als die des Verbindungsbereiches ist, um die Kraft, die für das Einhaken und für das Außereingriffbringen des entsprechenden Hakens (5b, 5b') erforderlich ist, zu minimieren.

14. Verbindungsvorrichtung (1) nach den Ansprüchen 8 und 13, **dadurch gekennzeichnet, dass** sie von der einzusteckenden Leitung (2) und der aufnehmenden Leitung (4), von der oder den Dichtungen (3), von den Einhakfingern (5), beispielsweise vier an der Zahl, sowie von dem von letzteren durchgriffenen Ring (6) gebildet ist.

15. Klimatisierungs- oder Servolenkungskreislauf für ein Kraftfahrzeug, **dadurch gekennzeichnet, dass** er wenigstens eine Verbindungsvorrichtung (1, 101, 201) nach einem der vorhergehenden Ansprüche umfasst.

16. Verfahren zum Verriegeln/Trennen einer Verbindung zwischen zwei Leitungen, einer einzusteckenden (2) und einer aufnehmenden (4), das mittels einer Vorrichtung (1, 101, 201) nach einem der Ansprüche 1 bis 14 durchgeführt wird, **dadurch gekennzeichnet, dass** es umfasst:
- für den Erhalt der verriegelten Verbindungsposition:
a) ein Einhaken des oder eines jeden Fingers (5) an dem Verbindungsanschlag (2b) zwischen diesen Leitungen, wahlweise mittels eines Rings (210) zur Winkelverriegelung des oder der Finger, der den Anschlag übergreift und der eine Aufnahme oder Aufnahmen (211, 212, 213) aufweist, die den oder die Haken (5b, 5b') selektiv aufnehmen, um der Relativdrehung der einzusteckenden Leitung und der aufnehmenden Leitung entgegen zu wirken, anschließend
b) eine Axialverschiebung (A) der Verriegelungs- und Trennmittel (6, 106, 206) in Richtung des Anschlags, die sie an diesen Anschlag bringt, um dem Außereingriffbringen des oder eines jeden Fingers durch den oder jeden Verriegelungsabschnitt (6b) dieser Mittel entgegen zu wirken, wobei dieser Schritt b) vorzugsweise ferner das Halten des Verriegelungsabschnittes axial an dem Anschlag (2b) durch eine Kraft, die auf ein Halteorgan (6d, 106d, 206d) das diese Vorrichtung aufweist, ausgeübt wird, umfasst, und
- für den Erhalt der Trennposition:
c) ein Entriegeln dieser Verbindungsposition, um diese Mittel von dem Anschlag zu trennen, wobei dieser Schritt c) vorzugsweise mittels einer in entgegen gesetzter Richtung auf das Halteorgan ausgeübten Kraft vollzogen wird, anschließend
d) eine Axialverschiebung dieser Mittel in umgekehrter Richtung (B), um den oder jeden Finger durch eine Hebelwirkung radial nach außen zu drücken, die durch den oder jeden Trennabschnitt (6c) dieser Mittel unter der Rampe (5e) des oder eines jeden Fingers angelegt wird, um letzteren von dem Anschlag außer Eingriff zu bringen.
